# EUROPÄISCHE PATENTSCHRIFT

(11) **EP 4 102 085 B1**
(45) Veröffentlichungstag und Bekanntmachung des Hinweises auf die Patenterteilung: **27.09.2023**
(21) Anmeldenummer: 21178938.3
(22) Anmeldetag: 11.06.2021
(51) Int. Cl.: F16B 13/14

(54) **BEFESTIGUNGSSYSTEM ZUR ANBRINGUNG VON PLATTENFÖRMIGEN ELEMENTEN**
FASTENING SYSTEM FOR MOUNTING PLATE-SHAPED ELEMENTS
SYSTÈME DE FIXATION DESTINÉ À L'APPLICATION DES ÉLÉMENTS EN FORME DE PLAQUE

(43) Veröffentlichungstag der Anmeldung: 14.12.2022
(73) Patentinhaber: RANIT-Befestigungssysteme GmbH, 45701 Herten (DE)
(72) Erfinder: Giertulla, Roger, 44651 Herne (DE); Gräwe, Bernd, 45701 Herten (DE)
(74) Vertreter: Kohlmann, Kai

(56) Entgegenhaltungen:
- EP-A1- 2 071 197
- WO-A1-2007/099739
- DE-B4- 19 924 205
- DE-U1-202005 006 303
- KR-A- 20190 008 594
- RU-C1- 2 584 425

## Beschreibung

Die Erfindung betrifft ein Befestigungssystem zur Anbringung von plattenförmigen Elementen an einem tragenden Untergrund.

Verfahren zur Anbringung von plattenförmigen Elementen, insbesondere Dämmstoffplatten, an einem tragenden Untergrund sowie Befestigungssysteme hierfür sind aus dem Stand der Technik bekannt. Durch ein in das plattenförmige Element vorgebohrtes Loch wird eine Hülse mit einem durch die Hülse hindurchführbaren Befestigungsmittel in das plattenförmige Element versenkt eingebracht und mittels des Befestigungsmittels im Untergrund verankert. Die Hülse, auch als Siebhülse bezeichnet, weist eine Mehrzahl von Wanddurchbrechungen auf, um ein Hindurchtreten von in den Innenraum der Hülse eingebrachten Klebstoff zu ermöglichen.

Bei dem Befestigungsmittel handelt es sich beispielsweise um eine Schraube oder wenn der Untergrund dies erfordert, eine Kombination aus Dübel und Schraube. Unter dem Begriff "tragender Untergrund" wird neben Fassadenwänden auch jede Art von Unterkonstruktion verstanden, auf die die plattenförmigen Elemente, insbesondere Leichtbauteile wie Schaumstoffkörper und wärme- bzw. schallisolierende Materialien in Form von Platten, Paneelen, Leisten etc. montiert werden. Derartige Befestigungssysteme finden insbesondere Verwendung zur Montage von Wärmedämmverbundsystemen auf Putzbasis zur Dämmung. Hierbei wird üblicherweise eine Dämmschicht, beispielsweise aus Polystyrolplatten oder aus hochverdichteten Steinwolleplatten, auf das Mauerwerk geklebt, dann verdübelt sowie anschließend verputzt.

Ein Befestigungssystem ist aus der EP 3 138 974 A1 bekannt. Die Siebhülsen sind üblicherweise zylindrisch ausgebildet und weisen einen Außendurchmesser auf, der im Wesentlichen dem Durchmesser einer Bohrung innerhalb der Dämmstoffplatte entspricht. Klebstoff wird in den Innenraum der Hülse eingebracht und tritt durch die Durchbrechungen innerhalb der Hülse nach außen hindurch, um dort auszuhärten und einen festen Verbund zwischen dem plattenförmigem Element und dem Befestigungssystem zu schaffen.

In der Praxis hat sich jedoch gezeigt, dass der durch die Durchbrechungen hindurchtretende Klebstoff nicht stets in der Lage ist, das angrenzende Material des plattenförmigen Elements soweit zu verdrängen, dass ausreichende Mengen an Klebstoff durch die Durchbrechungen der Hülse hindurchtreten können.

Um den Verbund mit dem plattenförmigen Element zu verbessern schlägt die EP 3 421 678 A1 eine Siebhülse vor, die zumindest über eine Teillänge einen Außendurchmesser aufweist, der kleiner ist, als das vorab in das plattenförmige Element gebohrte Loch. Die Siebhülse weist eine Mehrzahl von Wanddurchbrechungen auf, wobei die Hülse über ihren Umfang verteilt angeordnet wenigstens zwei Abstandhalter aufweist, die über den Außendurchmesser des Grundkörpers der Hülse hinausragend ausgebildet sind und somit radial nach außen hervorstehend am Hülsengrundkörper vorgesehen sind. Hierdurch wird die Hülse des Befestigungssystems mittig innerhalb des in dem plattenförmigen Element vorab eingebrachten Bohrlochs zentriert. Nach dem Einbringen der Hülse in das plattenförmige Element und dem Verankern des Befestigungsmittels im tragenden Untergrund wird der aushärtbare Klebstoff in die Hülse eingebracht, tritt durch die Mehrzahl von Wanddurchbrechungen hindurch und bildet aufgrund des entstandenen Zwischenraums zwischen der Siebhülse und dem plattenförmigen Element mit der Außenseite des Lochs eine vollflächige Verbindung. Hierdurch wird sichergestellt, dass der Kleber die Hülse umschließt und die Hülse innerhalb des Lochs in dem plattenförmigen Element einbettet. Als Kleber eignet sich insbesondere ein Klebeschaum, vorzugsweise ein Klebeschaum, der als Brandschutzschaum der Klasse B1 nach DIV 4120 - 1 eingeordnet ist. Bevorzugt wird als Kleber ein PU-Schaum aufgrund einer vergleichsweise geringen Expansion und hoher Klebekraft nach dem Abbinden.

Das bekannte Befestigungssystem kann nicht nur dazu verwendet werden, Dämmstoffplatten direkt auf einen tragenden Untergrund anzubringen, sondern es kann auch zur Sanierung von bereits bestehenden Dämmfassaden genutzt werden. Auf die bereits am tragenden Untergrund angebrachte Dämmfassade werden neue, zusätzliche Dämmstoffplatten aufgeklebt und dann verdübelt. Das bekannte Befestigungssystem muss dann so ausgelegt werden, dass die Hülse eine Länge aufweist, die beide Dämmstoffplatten, sowohl die alte als auch die neue, miteinander verbinden kann. Hierdurch muss die alte Dämmung nicht entfernt werden, sondern es wird zusätzlich eine neue Dämmstoffplatte auf die alte geklebt und verdübelt, was in der Fachwelt als sogenanntes "Aufdoppeln" bezeichnet wird. Abhängig von der Dicke und der Anzahl der Lagen der anzubringenden Dämmstoffplatten müssen Hülsen in unterschiedlicher Länge hergestellt und auf der Baustelle bereitgehalten werden. Die Herstellung nicht baugleicher Hülsen ist aufwendig und kostenintensiv. Die Bereithaltung von Hülsen unterschiedlicher Länge auf der Baustelle erhöht außerdem den logistischen Aufwand.

Ausgehend von diesem Stand der Technik liegt der Erfindung die Aufgabe zugrunde, ein Befestigungssystem zur Verfügung zu stellen, mit dem sich plattenförmige Elemente, insbesondere Dämmstoffplatten, in unterschiedlicher Dicke und/oder Anzahl der Lagen an einem Untergrund problemlos verankern lassen.

Erfindungsgemäß wird diese Aufgabe mittels eines Befestigungssystems mit den Merkmalen des Anspruch 1 gelöst.

Unterschiedlich dicke plattenförmige Elemente und/oder Aufdopplungen lassen sich mit dem erfindungsgemäßen Befestigungssystem problemlos befestigen, in dem mindestens zwei Hülsen mit Wanddurchbrechungen in einer Verankerungsrichtung hinter dem Befestigungsmittel angeordnet sind, wobei das Befestigungsmittel durch die Hülsen hindurchführbar ist und von der in Verankerungsrichtung vorderen Hülse aufgenommen wird. Mittels der lösbaren Verbindung werden die einzelnen Hülsen abhängig von der benötigten Gesamtlänge zu einem Bauteil zusammengefügt, wobei sämtliche Hülsen miteinander fluchten.

Seitens des Herstellers des Befestigungssystems genügt es, Hülsen mit Wanddurchbrechungen in Standardlänge, beispielsweise in zwei unterschiedlichen Standardlängen von 40 mm und 80 mm, herzustellen. Auf der Baustelle werden die Hülsen in Standardlänge(n) entsprechend der benötigten Gesamtlänge lediglich zusammengesetzt.

Eine einfache Möglichkeit zum Zusammensetzen der Hülsen besteht darin, dass die lösbare Verbindung eine Schraubverbindung ist. Die Schraubverbindung weist zwei Verbindungspartner auf, wobei ein Verbindungspartner ein Außengewinde und ein Verbindungspartner ein Innengewinde ist. Zumindest jede zur Verlängerung der in Verankerungsrichtung vorderen Hülse benötigte weitere Hülsen weist beispielsweise an einem Ende ein Außengewinde und an einem gegenüberliegenden Ende ein Innengewinde auf. Die weitere Hülse lässt sich mit ihrem Außengewinde in das Innengewinde der in Verankerungsrichtung davor angeordneten Hülse einschrauben. Die Hülsen sind sämtlich in an sich bekannter Weise mit Wanddurchbrechungen versehen, so dass der Durchtritt des Klebstoffs durch die zusammengesetzte Hülse über deren gesamte Länge nicht beeinträchtigt wird.

Eine weitere, besonders bevorzugte Möglichkeit zum einfachen Zusammensetzen der Hülsen in der gewünschten Gesamtlänge besteht darin, dass die lösbare Verbindung eine rotationssymmetrische Schnappverbindung ist. Schnappverbindungen sind formschlüssige Verbindungen, wobei eine vorstehende Stelle eines Verbindungspartners bei der Montage kurzfristig ausgelenkt und in eine Vertiefung (Hinterschnitt) des anderen Verbindungspartners einrastet. Aufgrund der einfachen Montage stellt die Schnappverbindung eine besonders kostengünstige Verbindungsmöglichkeit dar. Für die miteinander zu verbindenden Hülsen eignet sich insbesondere eine rotationssymmetrische, zylindrische Schnappverbindung, bei der ein an einem Verbindungspartner angeordneter ringförmiger Wulst in eine entsprechende ringförmige Vertiefung an dem anderen Verbindungspartner einrastet. Der ringförmige Wulst und die Vertiefung sind jeweils an einem geschlossenen Endabschnitt der beiden Hülsen angeordnet. Der Endabschnitt mit der Wulst befindet sich beispielweise an einem in Verankerungsrichtung vorderen Ende der zu verbindenden Hülse. Der Endabschnitt mit der umlaufenden Vertiefung befindet sich beispielweise an einem in Verankerungsrichtung hinteren Ende der zu verbindenden Hülse. Die umlaufende Vertiefung ist in eine innere Mantelfläche eingebracht. Grundsätzlich können Wulst und Vertiefung die Position auch tauschen.

Zur dübellosen Verankerung des Befestigungssystems an einem tragenden Untergrund ist das Befestigungsmittel eine in die in Verankerungsrichtung vordere Hülse eingesetzte Befestigungsschraube, die für ein unmittelbares Einschrauben in den Untergrund eingerichtet ist. Bei einem Untergrund aus Holz kann das Befestigungsmittel beispielsweise eine in die vordere Hülse eingesetzte Holzschraube sein.

Zur Verankerung des Befestigungssystems an einem tragenden Untergrund mittels Dübel und Schraube ist der Dübel in vorteilhafter Ausgestaltung der Erfindung als von der Hülse separates Bauteil ausgeführt, jedoch drehfest mit der in Verankerungsvorrichtung vorderen Hülse verbindbar. Die separate Herstellung von Hülse und Dübel als Spritzgießteile aus Kunststoff ist gegenüber einer Anformung des Dübels an die vordere Hülse vorteilhaft. Grundsätzlich kann die vordere Hülse jedoch auch mit angeformten Dübel ausgeführt sein.

Der Dübel kann zur lösbaren, drehfesten Verbindung mit der in Verankerungsrichtung vorderen Hülse einen Mehrkantkopf aufweisen. Die Hülse ist im Inneren mit einer dazu komplementären Mehrkantaufnahme ausgebildet. Durch diese Zweiteiligkeit von Dübel und Hülse werden die Einsatzmöglichkeiten des Befestigungssystems erhöht, weil unterschiedliche Dübel mit der in Verankerungsrichtung vorderen Hülse kombiniert werden können. Die drehfeste Verbindung zwischen Hülse und Dübel bewirkt, dass die Schraube problemlos in den Dübel eingeschraubt werden kann, ohne dass sich dabei der Dübel in dem Bohrloch mit dreht.

Sofern die komplementäre Mehrkantaufnahme nicht Bestandteil der in Verankerungsrichtung vorderen Hülse selbst ist, kann in einer Ausgestaltung der Erfindung in die Hülse ein Adapter mit einer zu dem Mehrkantkopf des Dübels komplementären Mehrkantaufnahme eingesetzt werden. Der Adapter ist seinerseits wiederum gegenüber der in Verankerungsrichtung vorderen Hülse verdrehgesichert. Ein Vorteil der Verwendung eines Adapters besteht darin, dass baugleiche Hülsen für die in Verankerungsrichtung vordere Hülse und sämtliche weiteren Hülsen verwendbar sind. Zusätzliche Werkzeugkosten für unterschiedliche Hülsentypen können hierdurch vermieden werden.

In einer weiteren Ausgestaltung der Erfindung lassen sich baugleiche Hülsen mit einer lösbaren Verbindung an ihrem vorderen und hinteren Ende verwenden, wenn an einem in Verankerungsrichtung vorderen Ende im Inneren jeder Hülse eine Formschlusskontur angeordnet ist, die mit einer komplementären Formschlusskontur des Dübels zusammenwirkt. Der Dübel mit integraler Formschlusskontur wird in diesem Fall ohne Zwischenschaltung eines Adapters drehfest, aber lösbar von der in Verankerungsrichtung vorderen Hülse aufgenommen.

Besonders bevorzugt ist die Mantelfläche jeder Hülse im Wesentlichen kreiszylindrisch ausgebildet. Hierdurch wird ein Befestigungssystem geschaffen, dass nicht nur einfach herstellbar ist, sondern auch über seine gesamte Länge eine gleichmäßige Verbindung zwischen Befestigungssystem und plattenförmigem Element bereitstellt. Die Hülse kann jedoch auch einen rechteckigen, insbesondere quadratischen Querschnitt aufweisen. Darüber hinaus kann der Querschnitt über die Länge jeder Hülse variieren, insbesondere kann jede Hülse konisch ausgebildet sein.

In vorteilhafter Ausgestaltung der Erfindung weist jede Hülse über ihren Umfang verteilt mindestens zwei Abstandhalter auf, die über eine Mantelfläche der Hülse hinausragen. Derartige Abstandshalter sind an sich aus der EP 3 421 678 A bekannt. Die Abstandshalter bewirken, dass jede Hülse des erfindungsgemäßen Befestigungssystems mittig innerhalb eines in dem plattenförmigen Element vorab eingebrachten Bohrlochs zentriert wird. Die Abstandhalter verhindern zudem, dass die Hülsen sich bei Verankern des Befestigungsmittels im tragenden Untergrund infolge des dabei aufgebrachten Drehmoments innerhalb des plattenförmigen Elements verdrehen.

Die Abstandhalter sind beispielsweise in Form von Stegen oder Flossen ausgebildet. Vorzugsweise sind mindestens zwei Abstandhalter sowohl an dem in Verankerungsrichtung vorderen Ende jeder Hülse als auch an dem hinteren Ende jeder Hülse angeordnet. Hierdurch wird erreicht, dass nur die Abstandhalter, nicht jedoch die Hülse mit der Lochwand in dem plattenförmigen Element in Kontakt gelangt. Jede Hülse wird von dem aushärtbaren Klebstoff vollständig umschlossen.

Grundsätzlich sind sämtliche Hülsen ohne Halteteller ausgeführt, um diese lösbar miteinander verbinden zu können. Die haltetellerlosen Hülsen ermöglichen eine sehr wirtschaftliche Montage, weil sie baugleich ausgeführt werden können. Hingegen setzen Tellerdübel eine an die jeweilige Dämmstoffdicke stets angepasste Länge voraus, womit eine Bauteile-Vielfalt unvermeidlich ist. Es ist nicht erforderlich das vorgebohrte Loch oberhalb der in den Dämmstoffplatten versenkten Hülsen mit einer Abdeckscheibe bzw. Rondelle zu verschließen. Der gesamte obere Loch-Hohlraum wird durch den Klebstoff ausgefüllt, der radial durch die Durchbrechungen hindurchtritt und sich in dem die Hülse umschließenden Dämmstoffmaterial ausbreitet.

In einer Ausgestaltung der Erfindung kann mit der letzten von mehreren Hülsen lösbar ein Halteteller verbunden sein. Der Halteteller bewirkt einen bündigen Abschluss von Befestigungssystem und plattenförmigem Element nach dem Einbringen des Befestigungssystems, insbesondere in Mineralwolle-Dämmstoffplatten. Die lösbare Verbindung zwischen Halteteller und Hülse ist vorzugsweise ebenfalls als Schraub- oder Schnappverbindung ausgestaltet. Es kann der ohnehin vorhandene Verbindungspartner der Schraub- oder Schnappverbindung an der letzten Hülse verwendet werden, um mit dem komplementären Verbindungspartner einer Schraub- oder Schnappverbindung zusammenzuwirken, die an dem Halteteller angeordnet ist.

Der Halteteller ist insbesondere ein Spiralhalteteller, der eine spiralförmig um den Umfang eines Grundkörpers verlaufende Schneidkante aufweist, die sich beim Einführen in ein plattenförmiges Element in das Material schraubenförmig einschneidet und somit einen bündigen Abschluss des Befestigungssystems innerhalb des plattenförmigen Elements bewirkt.

Nachfolgend wird die Erfindung anhand der Ausführungsbeispiele näher erläutert. Es zeigen:
- **Figur 1**: ein erstes Ausführungsbeispiel miteinander verbundener Hülsen eines erfindungsgemäßen Befestigungssystems in perspektivischen Ansichten a und c, in Seitenansicht b sowie eine Draufsicht d auf eine in Verankerungsrichtung vordere Hülse,
- **Figur 2**: ein zweites Beispiel von miteinander verbundenen Hülsen eines erfindungsgemäßen Befestigungssystems in perspektivischer Ansicht a, in Seitenansicht b sowie in Schnittdarstellung c durch eine der Hülsen,
- **Figur 3**: eine Darstellung eines Befestigungsmittels umfassend Dübel und Schraube in perspektivischen Ansichten a, c und Seitenansicht b,
- **Figur 4**: einen Adapter zum Einsetzen eines Dübels nach Figur 3 in eine in Verankerungsrichtung vordere Hülse eines Befestigungssystems nach Figur 2 in perspektivischer Ansicht a, in Seitenansicht b, in Draufsicht c und in einer Unteransicht d,
- **Figur 5**: ein drittes Ausführungsbeispiel von miteinander verbundenen Hülsen eines erfindungsgemäßen Befestigungssystems in perspektivischen Ansichten a, c sowie in Seitenansicht b,
- **Figur 6**: einen in eine Aufdopplung eines Wärmedämm-Verbundsystems eingebrachtes Befestigungssystem nach Figur 1 in einem Vormontagestadium,
- **Figur 7**: das fertig montierte Befestigungssystem nach Figur 6,
- **Figur 8**: ein in eine Aufdopplung eines Wärmedämm-Verbundsystems eingebrachtes Befestigungssystems entsprechend Figur 1 jedoch mit abweichendem Befestigungsmittel sowie

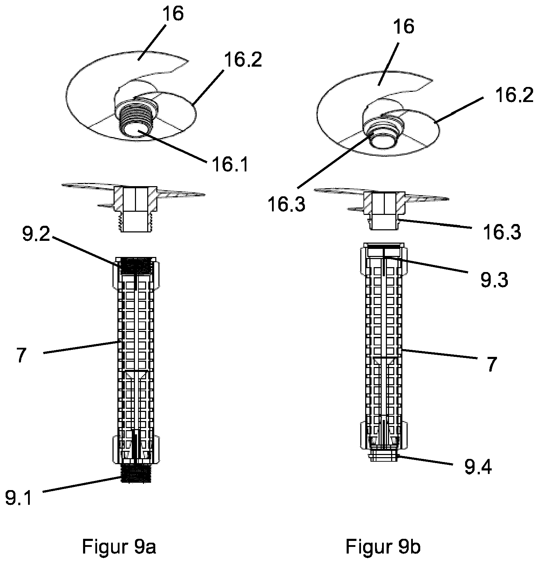

- **Figur 9**: eine Hülse eines erfindungsgemäßen Befestigungssystems, wobei an der Hülse ein Spiralhalteteller mit einer Schneidkante befestigt ist, wobei Abbildung a eine Schraubverbindung und Abbildung b eine Schnappverbindung zwischen Spiralhalteteller und Hülse zeigen.

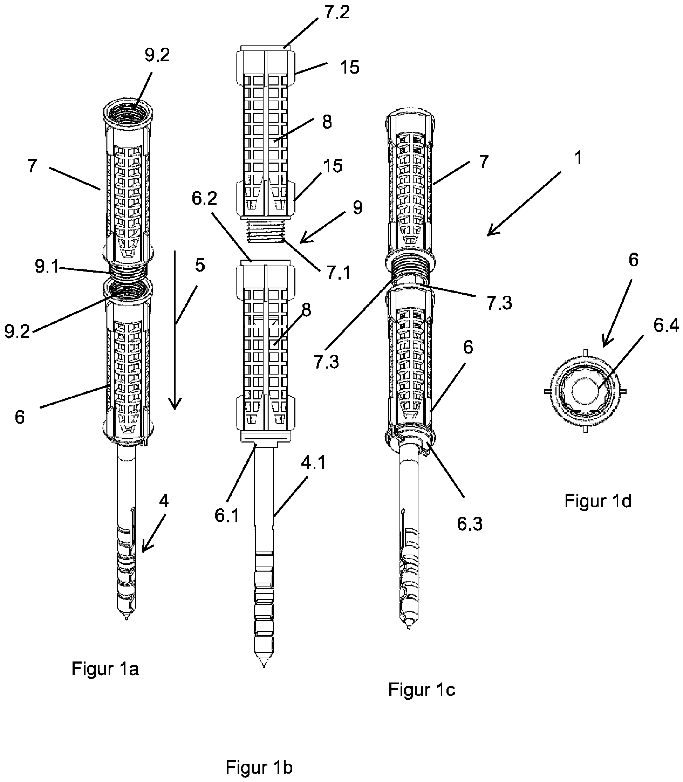

Figur 1 zeigt ein erstes Ausführungsbeispiel eines erfindungsgemäßen Befestigungssystems (1) zur Anbringung von plattenförmigen Elementen (2) an einem tragenden Untergrund (3) .

Das Befestigungssystem (1) umfasst als wesentliche Bestandteile ein Befestigungsmittel (4) sowie eine in Verankerungsrichtung (5) unmittelbar hinter dem Befestigungsmittel (4) angeordnete vordere Hülse (6) mit Wanddurchbrechungen (8) sowie mindestens eine weitere, in Verankerungsrichtung hinter der Hülse (6) angeordnete hintere Hülse (7). Die beiden Hülsen (6), (7) sind über eine lösbare Verbindung (9) miteinander verbunden.

Die Verankerungsrichtung (5) verläuft im Wesentlichen senkrecht zu dem Untergrund (3) und in dessen Richtung, an dem mithilfe des erfindungsgemäßen Befestigungssystems (1) plattenförmige Elemente (2) befestigt werden. Nachfolgend wird unter Bezugnahme auf die Verankerungsrichtung (5) das in Verankerungsrichtung vorauseilende Ende jeder Hülse (6, 7) als vorderes Ende und das gegenüberliegende Ende jeder Hülse (6,7) als hinteres Ende (6.1, 6.2, 7.1, 7.2) bezeichnet. Die in Verankerungsrichtung (5) vordere Hülse (6) wird nachfolgend auch als Grundhülse (6) bezeichnet.

Die lösbare Verbindung (9) ist im dargestellten Ausführungsbeispiel als Schraubverbindung ausgeführt, wobei ein Verbindungspartner am vorderen Ende (7.1) der hinteren Hülse (7) ein Außengewinde (9.1) und ein Verbindungspartner am hinteren Ende (6.2) der vorderen Hülse (6) ein Innengewinde (9.2) ist. Die als Verlängerung dienende, hintere Hülse (7) weist an ihrem hinteren Ende (7.2) ein Innengewinde (9.2) auf, eingerichtet um ggf. das Außengewinde (9.1) einer weiteren Hülse (7) als Verlängerung des Befestigungssystems (1) aufzunehmen. Die Außen- bzw. Innengewinde (9.1, 9.2) sind endseitig in geschlossene Abschnitte der Hülsen (6, 7) eingebracht, die keine Wanddurchbrechungen (8) aufweisen.

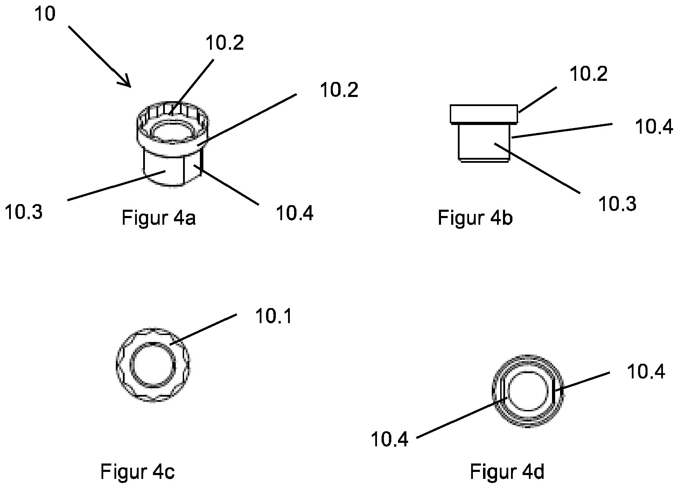

Aus Figur 1c ist erkennbar, dass der geschlossene, das Außengewinde (9.1) aufweisende Abschnitt der hinteren Hülse (7) einen unrunden Innenquerschnitt mit zwei im parallelen Abstand gegenüberliegenden Abflachungen (7.3) aufweist. Die technische Bedeutung der Abflachungen (7.3) wird weiter unten anhand der Figur 4 näher erläutert.

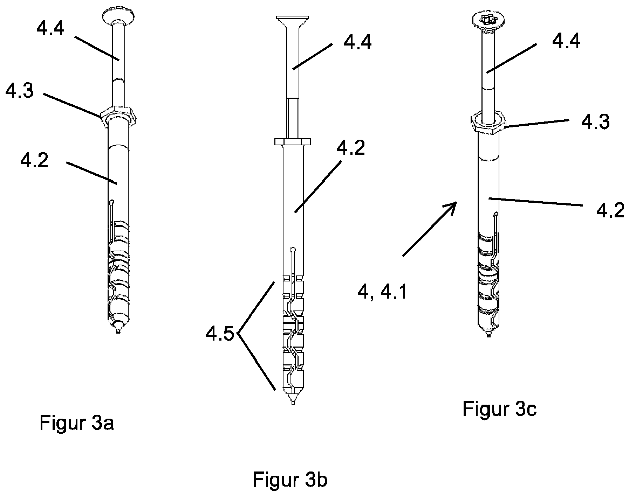

In dem dargestellten Ausführungsbeispiel ist die vordere Hülse(6), d.h. die Grundhülse (6), abweichend von der hinteren Hülse (7) ausgestaltet; sie weist an ihrem vorderen Ende (6.1) eine Abschlusskappe (6.3) mit einem zentralen Durchgang auf, durch den ein Dübelschaft (4.2) eines Dübels (4.1) (vgl. Figur 3) hindurchführbar ist. Um den Dübel (4.1) drehfest in der Grundhülse (6) zu halten, weist dieser einen Mehrkantkopf (4.3) auf, der formschlüssig von einer komplementären Mehrkantaufnahme (6.4), die den Durchgang in der Abschlusskappe (6.3) umgibt, aufgenommen wird. Die Mehrkantaufnahme (6.4) in der Abschlusskappe (6.3) ist in der Draufsicht auf die Grundhülse (6) in Figur 1d dargestellt. Der Dübel (4.1) wird vorzugsweise mit einer in den Dübelschaft (4.2) bereits teilweise eingedrehten Schraube (4.4) in die Hülse (6) eingesetzt.

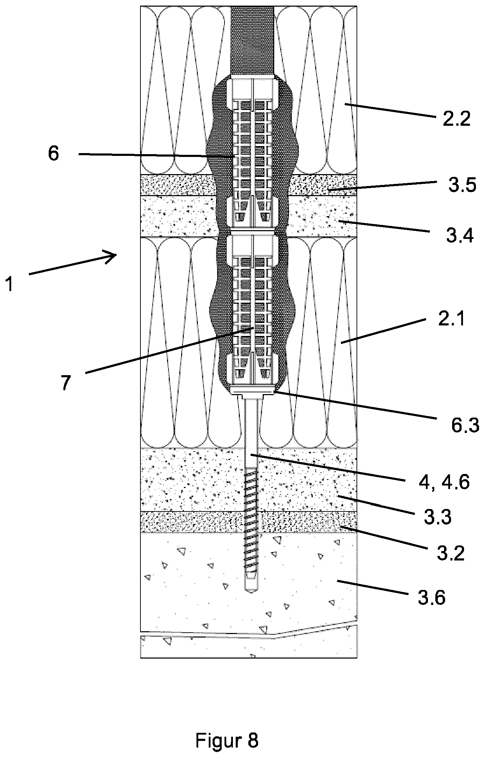

Anstelle eines Befestigungsmittels (4) umfassend einen Dübel (4.1) und eine Schraube (4.4) kann in die Hülse (6) eine Befestigungsschraube (4.6) eingesetzt werden, deren Schaft sich durch die Öffnung in der Abschlusskappe (6.3) erstreckt und deren Kopf von dem den Durchgang umgebenden Randbereich der Abschlusskappe abgestützt wird. Der Schraubenkopf der Befestigungsschraube (4.6) ist durch das Innere der miteinander verbundenen Hülsen (6, 7) zugänglich, sodass sich die Befestigungsschraube (4.6) dübellos in den Untergrund (3), beispielsweise eine Holzkonstruktion (3.6) einschrauben lässt (vgl. Figur 8).

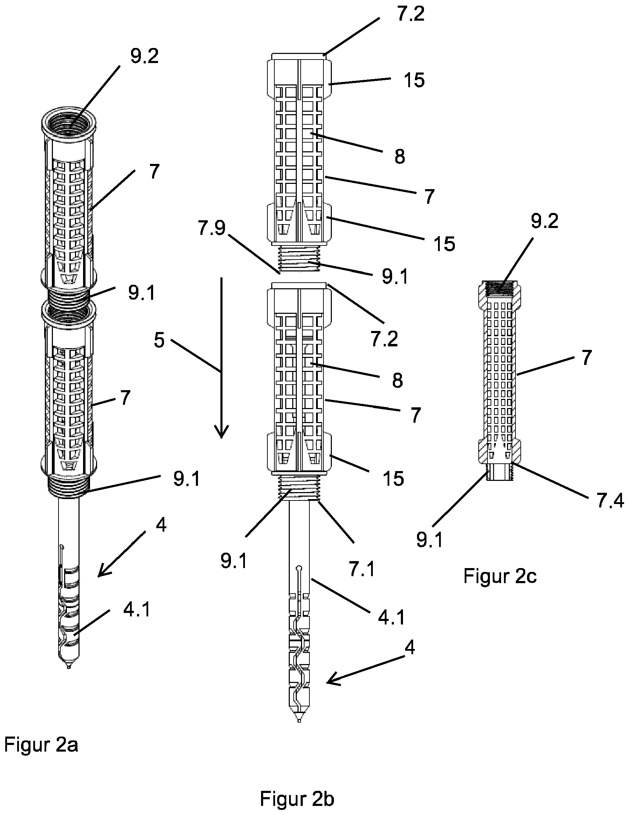

Figur 2 zeigt ein zweites Ausführungsbeispiel des erfindungsgemäßen Befestigungssystems (1), das sich insoweit von dem Ausführungsbeispiel nach Figur 1 unterscheidet, das die in Verankerungsrichtung (5) vordere Hülse (7) und die zur Verlängerung lösbar damit verbundene weitere Hülse (7) baugleich sind. Beide Hülsen (7) weisen an ihrem vorderen Ende (7.1) jeweils ein Außengewinde (9.1) und an ihrem hinteren Ende (7.2) ein Innengewinde (9.2) auf. Es ist erkennbar, dass das Außengewinde (9.1) am vorderen Ende (7.1) der Grundhülse für die Funktion des Befestigungssystems (1) nicht erforderlich ist. Gleichwohl bietet diese Ausführungsform den Vorteil, dass das Befestigungssystem (1) ausschließlich aus baugleichen Hülsen (7) zusammensetzbar ist. Hierdurch lassen sich die Herstellungskosten durch Vereinheitlichung der Hülsen (7) reduzieren. Darüber hinaus wird die Logistik an der Baustelle vereinfacht, da lediglich Hülsen (7) in Standardlängen vorgehalten werden müssen, die entsprechend der Dicke und/oder Anzahl der Lagen der plattenförmigen Elemente (2) mittels der lösbaren Verbindung (9) zusammengefügt werden.

Um den Dübel (4.1) mit dem Mehrkantkopf (4.3) in der in Verankerungsrichtung (5) vorderen Hülse (7) aufnehmen zu können, wird in die Grundhülse ein in Figur 4 dargestellter Adapter (10) eingesetzt. Der Adapter (10) weist eine mit dem Mehrkantkopf (4.3) des Dübels (4.1) komplementäre Mehrkantaufnahme (10.1) an einem in Bezug auf die Verankerungsrichtung (5) hinteren, hohlzylindrischen Abschnitt (10.2) auf. An dem hinteren Abschnitt (10.2) schließt sich ein in Bezug auf die Verankerungsrichtung (5) vorderer, unrunder Abschnitt (10.3) an, der zwei gegenüberliegende Abflachungen (10.4) aufweist. Der Abstand der Abflachungen (10.4) entspricht dem Abstand der Abflachungen (7.3) am vorderen Ende der Hülse (7), wie in Figur 1c erkennbar. Der Adapter (10) wird daher verdrehgesichert an dem vorderen Ende (7.1) der Hülse (7) durch die zusammenwirkenden Abflachungen (7.3, 10.4) von Hülse (7) und Adapter (10) gehalten, wobei der hohlzylindrische, hintere Abschnitt (10.2) auf einer Anlageschulter (7.4) der Hülse (7) aufliegt (vgl. Figur 2c).

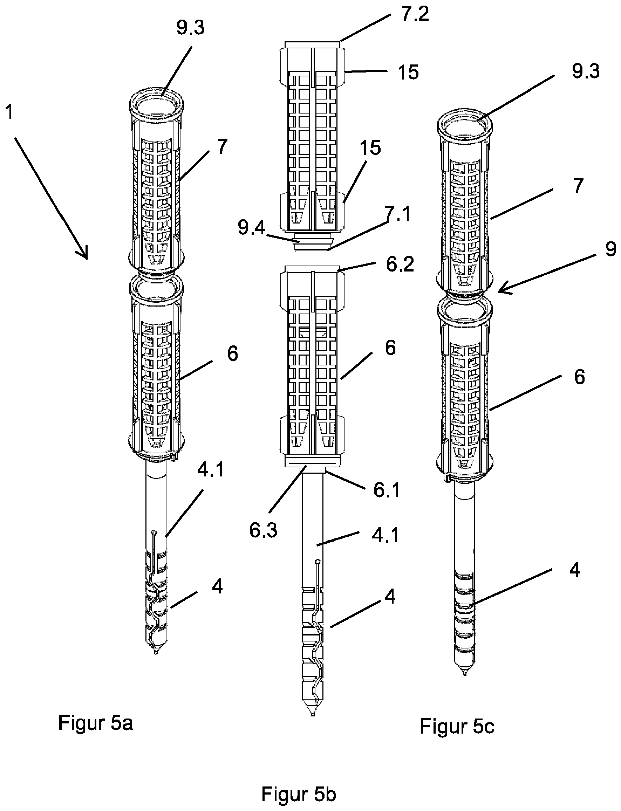

Figur 5 zeigt ein drittes Ausführungsbeispiel eines erfindungsgemäßen Befestigungssystems (1), das im Aufbau dem Befestigungssystem (1) nach Figur 1 entspricht. Unterschiede ergeben sich hinsichtlich der lösbaren Verbindung (9) zwischen der Grundhülse (6) und jeder weiteren Hülse (7) zur Verlängerung des Befestigungssystems (1). Die lösbare Verbindung (9) ist in dem Ausführungsbeispiel als eine Schnappverbindung ausgeführt, wobei der am hinteren Ende (6.2, 7.2) der Hülsen (6,7) angeordnete Verbindungspartner eine umlaufende, ringförmige Vertiefung (9.3) und der am vorderen Ende (7.1) der weiteren Hülse (7) angeordnete Verbindungspartner eine umlaufende Wulst (9.4) ist, die mit der korrespondierenden Vertiefung (9.3) an dem hinteren Ende (6.2) der Grundhülse (6) lösbar verrastet.

Hinsichtlich der Aufnahme des Dübels (4.1) in der Mehrkantaufnahme (6.4) der Abschlusskappe (6.3) wird auf die Erläuterungen zum Ausführungsbeispiel nach Figur 1 vollumfänglich Bezug genommen.

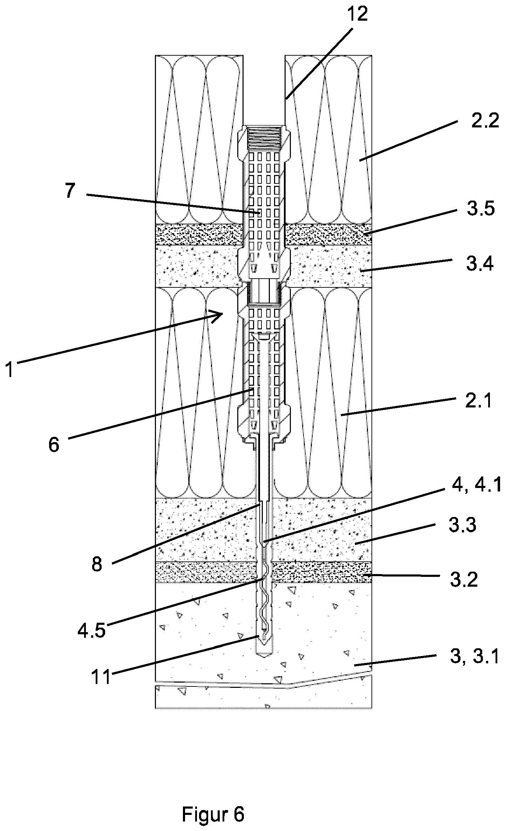

Figur 6 zeigt die Anwendung des erfindungsgemäßen Befestigungssystems (1) in einer Ausführungsform nach Figur 1 zur Befestigung einer Aufdopplung auf einem bestehenden Wärmedämmverbundsystem. Auf dem tragenden Untergrund (3), hier ein Mauerwerk (3.1) mit einer Putzschicht (3.2) und einer Kleberschicht (3.3) ist eine erste Lage Dämmstoffplatten (2.1) befestigt. Die erste Lage der Dämmstoffplatten (2.1) weist eine nach außen weisende Putzschicht (3.4) auf, auf der ein weiteres Wärmedämmverbundsystem angebracht werden soll. Hierzu werden weitere Dämmstoffplatten (2.2) in einer zweiten Lage, die sogenannte Aufdopplung, mittels einer Klebeschicht (3.5) auf der alten Putzschicht (3.4) aufgeklebt. In einem nächsten Schritt wird durch die beiden Lagen der Dämmstoffplatten (2.1, 2.2) hindurch bis in das Mauerwerk (3.1) ein Bohrloch (11) entsprechend dem Durchmesser des Dübels (4.1) vorgebohrt. Anschließend wird in die beiden Lagen der Dämmstoffplatten (2.1, 2.2) sowie die dazwischen befindliche Putz- und Kleberschicht (3.4, 3.5) eine gegenüber dem Bohrloch (11) größere Durchgangsbohrung (12) eingebracht. Sodann wird das vormontierte Befestigungssystem (1) umfassend die beiden miteinander verbundenen Hülsen (6, 7) zusammen mit dem Dübel (4.1) und der teilweise eingedrehten Schraube (4.4) soweit in die Durchgangsbohrung (12) eingesetzt, bis der Dübel (4.1) vollständig in das Bohrloch (11) in dem Mauerwerk (3.1) eingetaucht ist und das vordere Ende (6.1) der Grundhülse (6) am Bohrlochgrund der Durchgangsbohrung (12) anliegt. Grundsätzlich kann die Schraube (4.4) des Dübels auch nach der Positionierung des vormontierten Befestigungssystems (1) eingesetzt werden.

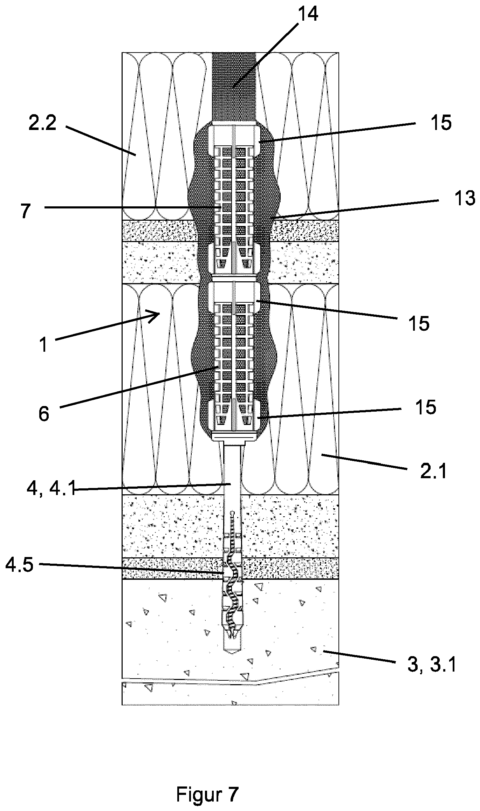

Sodann wird der Dübel (4.1) im Bereich seiner Spreizzone (4.5) durch die mittels eines Einschraubwerkzeuges eingeschraubte Schraube (4.4) in dem Bohrloch (11) in dem Mauerwerk (3.1) verankert. Sodann wird über die Durchgangsbohrung (12) und damit die miteinander verbundenen Hülsen (6, 7) Klebstoff eingebracht, der sich durch die gleichmäßig über den Umfang und die Länge der beiden Hülsen (6,7) angeordneten Wanddurchbrechungen (8) in dem Dämmstoffmaterial ausbreitet, wobei die Hülsen (6, 7) von dem Klebstoff (13) umschlossen werden, wie dies in Figur 7 durch die ausgezogenen Begrenzungslinien der Klebeverfüllung angedeutet ist. Zunächst wird der gesamte Hohlraum der beiden Hülsen (6, 7) und deren Umgebung und sodann der oberhalb der Hülsen (6,7) verbleibende Freiraum (14) der Durchgangsbohrung (12) durch den Klebstoff (13)ausgefüllt. Nach dem Aushärten des Klebstoffs (13) ist die aufgedoppelte Dämmstoffplatte (2.2) fest mit den beiden Hülsen (6, 7) verbunden und der metallische Kopf der Schraube (4.4) durch den Klebstoff (13) nach außen hin vollständig abgeschirmt.

In dem dargestellten Ausführungsbeispiel weisen sämtliche Hülsen (6, 7) über ihren Umfang verteilt jeweils vier Abstandshalter (15), sowohl an den vorderen Enden (6.1, 7.1) als auch den hinteren Enden (6.2, 7.2) auf, um die Verteilung des Klebstoffs (13) in dem gegenüber dem Durchmesser der Hülsen (6,7) größeren Querschnitt der Durchgangsbohrung (12) zu verbessern.

Figur 8 zeigt schließlich ein fertig montiertes Befestigungssystem (1) entsprechend Figur 7, wobei der Untergrund (3), an dem die erste Lage Dämmstoffplatten (2.1) befestigt ist kein Mauerwerk (3.1), sondern eine Holzkonstruktion (3.6) ist, in die unmittelbar die bereits erwähnte Befestigungsschraube (4.6), in diesem Fall eine Holzschraube eingreift, deren Kopf drehbar in der Abschlusskappe (6.3) der Grundhülse (6) gehalten wird.

Grundsätzlich weist keine der Hülsen (6,7) des Befestigungssystems (1) einen Halteteller auf. Abhängig vom Material des zu befestigenden plattenförmigen Elementes (2) kann es jedoch gewünscht sein, dass die in Verankerungsrichtung (5) letzte Hülse einen Spiralhalteteller (16) mit einer Schneidkante (16.2) aufweist. Um die Modularität der weiteren Hülsen (7) nicht zu beeinträchtigen, wird der Spiralhalteteller (16) mit einem Außengewinde (16.1) in das Innengewinde (9.2) der jeweils letzten Hülse (7) des Befestigungssystems (1) eingeschraubt. Die Schneidkante (16.2) des Spiralhaltetellers (16) schneidet sich beim drehenden Einführen in das nicht dargestellte plattenförmige Element ein und bewirkt einen bündigen Abschluss des Befestigungssystems (1).

| **Nr.** | **Bezeichnung** | **Nr.** | **Bezeichnung** |
|---|---|---|---|
| 1. | Befestigungssystem | 7.4 | Anlageschulter |
| 2. | Plattenförmiges Element | 8. | Wanddurchbrechung |
| 2.1 | Dämmstoffplatte | 9. | Lösbare Verbindung |
| 2.2 | Weitere Dämmstoffplatte | 9.1 | Außengewinde |
| 3. | Untergrund | 9.2 | Innengewinde |
| 3.1 | Mauerwerk | 93. | Vertiefung |
| 3.2 | Putzschicht | 9.4 | Wulst |
| 3.3 | Kleberschicht | 10. | Adapter |
| 3.4 | Putzschicht | 10.1 | Mehrkantaufnahme |
| 3.5 | Kleberschicht | 10.2 | Hinterer Abschnitt |
| 3.6 | Holzkonstruktion | 10.3 | Vorderer Abschnitt |
| 4. | Befestigungsmittel | 10.4 | Abflachungen |
| 4.1 | Dübel | 11. | Bohrloch |
| 4.2 | Dübelschaft | 12. | Durchgangsbohrung |
| 4.3 | Mehrkantkopf | 13. | Klebstoff |
| 4.4 | Schraube | 14. | Freiraum |
| 4.5 | Spreizzone | 15. | Abstandshalter |
| 4.6 | Befestigungsschraube | 16. | Spiralhalteteller |
| 5. | Verankerungsrichtung | 16.1 | Außengewinde |
| 6. | Hülse / Grundhülse | 16.2 | Schneidkante |
| 6.1 | Vorderes Ende | | |
| 6.2 | Hinteres Ende | | |
| 6.3 | Abschlusskappe | | |
| 6.4 | Mehrkantaufnahme | | |
| 7 . | Weitere Hülse | | |
| 7.1 | Vorderes Ende | | |
| 7.2 | Hinteres Ende | | |
| 7.3 | Abflachungen | | |

## Patentansprüche

1. Befestigungssystem (1) zur Anbringung von plattenförmigen Elementen (2) an einem tragenden Untergrund (3) umfassend
- ein Befestigungsmittel (4) eingerichtet zur Verankerung des Befestigungssystems (1) in dem Untergrund (3),
- mindestens zwei in einer Verankerungsrichtung (5) hinter dem Befestigungsmittel (4) angeordnete Hülsen (6,7) mit Wanddurchbrechungen (8), wobei das Befestigungsmittel (4) durch die Hülsen (6,7) hindurchführbar ist und die in Verankerungsrichtung vordere Hülse (6,7) das Befestigungsmittel (4) aufnimmt,
- eine lösbare Verbindung zwischen sämtlichen Hülsen.

2. Befestigungssystem (1) nach Anspruch 1, **dadurch gekennzeichnet, dass** die lösbare Verbindung eine Schraubverbindung ist.

3. Befestigungssystem (1) nach Anspruch 2, **dadurch gekennzeichnet, dass** die Schraubverbindung zwei Verbindungspartner aufweist, wobei ein Verbindungspartner ein Außengewinde (9.1) und ein Verbindungspartner ein Innengewinde (9.2) ist.

4. Befestigungssystem (1) nach Anspruch 1, **dadurch gekennzeichnet, dass** die lösbare Verbindung eine zylindrische Schnappverbindung ist.

5. Befestigungssystem (1) nach Anspruch 4, **dadurch gekennzeichnet, dass** die Schnappverbindung zwei Verbindungspartner aufweist, wobei ein Verbindungspartner ein Wulst (9.4) und ein Verbindungspartner eine Vertiefung (9.3) ist.

6. Befestigungssystem (1) nach einem der Ansprüche 1 bis 5, **dadurch gekennzeichnet, dass** das Befestigungsmittel (4) eine in die in Verankerungsrichtung (5) vordere Hülse (6) eingesetzte Befestigungsschraube (4.6) ist, die für ein unmittelbares Einschrauben in den Untergrund (3) eingerichtet ist.

7. Befestigungssystem (1) nach einem der Ansprüche 1 bis 5, **dadurch gekennzeichnet, dass** das Befestigungsmittel (4) einen Dübel (4.1) und eine Schraube (4.4) umfasst, wobei der Dübel (4.1) drehfest mit der in Verankerungsrichtung (5) vorderen Hülse (6) verbindbar ist.

8. Befestigungssystem (1) nach Anspruch 7, **dadurch gekennzeichnet, dass** der Dübel (4.1) einen Mehrkantkopf (4.3) aufweist und die Hülse (6) im Inneren mit einer dazu komplementären Mehrkantaufnahme (6.4) ausgebildet ist.

9. Befestigungssystem (1) nach Anspruch 7, **dadurch gekennzeichnet, dass** der Dübel (4.1) einen Mehrkantkopf (4.3) aufweist und in die in Verankerungsrichtung (5) vordere Hülse (7) ein Adapter (10) mit einer zu dem Mehrkantkopf (4.3) komplementären Mehrkantaufnahme (10.1) verdrehgesichert eingesetzt ist.

10. Befestigungssystem (1) nach Anspruch 9, **dadurch gekennzeichnet,** das sämtliche Hülsen (7) baugleich sind.

11. Befestigungssystem (1) nach einem der Ansprüche 1 bis 10, **dadurch gekennzeichnet, dass** jede Hülse (6,7) einen Grundkörper mit einem kreisrunden Querschnitt aufweist.

12. Befestigungssystem (1) nach einem der Ansprüche 1 bis 11, **dadurch gekennzeichnet, dass** jede Hülse (6,7) über ihren Umfang verteilt mindestens zwei Abstandhalter (15) aufweist, die über eine Mantelfläche der Hülse (6,7) hinausragen.

13. Befestigungssystem (1) nach einem der Ansprüche 1 bis 12, **dadurch gekennzeichnet, dass** an der in Verankerungsrichtung (5) hinteren Hülse (7) lösbar ein Spiralhalteteller (16) mit einer Schneidkante (16.2) angeordnet ist.

14. Befestigungssystem (1) nach einem der Ansprüche 1 bis 13, **dadurch gekennzeichnet, dass** die Wanddurchbrechungen (8) in den Hülsen (6,7) für einen Durchtritt eines Klebstoffs, insbesondere eines Klebeschaums, eingerichtet sind.

## Claims

1. Fastening system (1) for mounting plate-shaped elements (2) on a supporting surface (3) comprising
- a fastening means (4) designed to anchor the fastening system (1) in the surface (3),
- at least two sleeves (6,7) arranged in an anchoring direction (5) behind the fastening means (4) and having wall openings (8), wherein the fastening means (4) can be guided through the sleeves (6,7) and the front sleeve (6,7) in the anchoring direction receives the fastening means (4),
- a releasable connection between all sleeves.

2. Fastening system (1) according to Claim 1, **characterized in that** the releasable connection is a screw connection.

3. Fastening system (1) according to Claim 2 **characterized in that** the screw connection has two connection partners, wherein one connection partner is an external thread (9.1) and one connection partner is an internal thread (9.2).

4. Fastening system (1) according to Claim 1, **characterized in that** the releasable connection is a cylindrical snap connection.

5. Fastening system (1) according to Claim 4 **characterized in that** the snap connection has two connection partners, wherein one connection partner is a bead (9.4) and one connection partner is a recess (9.3) .

6. Fastening system (1) according to one of Claims 1 to 5, **characterized in that** the fastening means (4) is a fastening screw (4.6), which is inserted into the front sleeve (6) in the anchoring direction (5) and is designed to be screwed directly into the surface (3).

7. Fastening system (1) according to one of Claims 1 to 5, **characterized in that** the fastening means (4) comprises an anchor (4.1) and a screw (4.4), wherein the anchor (4.1) can be connected to the front sleeve (6) in the anchoring direction (5) in a rotationally fixed manner.

8. Fastening system (1) according to Claim 7, **characterized in that** the anchor (4.1) has a multi-sided head (4.3) and the sleeve (6) is formed on the inside with a multi-sided receptacle (6.4) complementary thereto.

9. Fastening system (1) according to Claim 7, **characterized in that** the anchor (4.1) has a multi-sided head (4.3), and an adapter (10) with a multi-sided receptacle (10.1) complementary to the multi-sided head (4.3) is inserted secured against rotation into the front sleeve (7) in the anchoring direction (5) .

10. Fastening system (1) according to Claim 9, **characterized in that** all the sleeves (7) are identical.

11. Fastening system (1) according to one of Claims 1 to 10, **characterized in that** each sleeve (6,7) has a base body with a circular cross section.

12. Fastening system (1) according to one of Claims 1 to 11, **characterized in that** each sleeve (6,7) has at least two spacers (15), which are distributed over its circumference and project beyond a lateral surface of the sleeve (6,7).

13. Fastening system (1) according to one of Claims 1 to 12, **characterized in that** a spiral retaining plate (16) with a cutting edge (16.2) is releasably arranged on the rear sleeve (7) in the anchoring direction (5).

14. Fastening system (1) according to one of Claims 1 to 13, **characterized in that** the wall openings (8) in the sleeves (6,7) are designed for an adhesive, in particular an adhesive foam, to pass through.

## Revendications

1. Système de fixation (1), destiné au montage d'éléments (2) en forme de panneaux sur un support (3) porteur, comprenant
- un moyen de fixation (4), aménagé pour ancrer le système de fixation (1) dans le support (3),
- au moins deux douilles (6,7), placées derrière le moyen de fixation (4) dans une direction d'ancrage (5), pourvues d'ajours de paroi (8), le moyen de fixation (4) étant susceptible d'être enfilé à travers les douilles (6,7) et la douille (6,7) avant dans la direction d'ancrage réceptionnant le moyen de fixation (4),
- un assemblage amovible entre toutes les douilles.

2. Système de fixation (1) selon la revendication 1, **caractérisé en ce que** l'assemblage amovible est un raccord vissé.

3. Système de fixation (1) selon la revendication 2, **caractérisé en ce que** le raccord vissé comporte deux partenaires d'assemblage, un partenaire d'assemblage étant un filetage (9.1) et un partenaire d'assemblage étant un taraudage (9.2).

4. Système de fixation (1) selon la revendication 1, **caractérisé en ce que** l'assemblage amovible est un assemblage par encliquetage cylindrique.

5. Système de fixation (1) selon la revendication 4, **caractérisé en ce que** l'assemblage par encliquetage comporte deux partenaires d'assemblage, un partenaire d'assemblage étant un bourrelet (9.4) et un partenaire d'assemblage étant un creux (9.3).

6. Système de fixation (1) selon l'une quelconque des revendications 1 à 5, **caractérisé en ce que** le moyen de fixation (4) est une vis de fixation (4.6) insérée dans la douille (6) avant dans la direction d'ancrage (5), qui est aménagée pour un vissage direct dans le support (3).

7. Système de fixation (1) selon l'une quelconque des revendications 1 à 5, **caractérisé en ce que** le moyen de fixation (4) comprend une cheville (4.1) et une vis (4.4), la cheville (4.1) étant susceptible d'être assemblée de manière solidaire en rotation avec la douille (6) avant dans la direction d'ancrage (5).

8. Système de fixation (1) selon la revendication 7, **caractérisé en ce que** la cheville (4.1) comporte une tête polygonale (4.3) et la douille (6) est conçue à l'intérieur avec un logement polygonal (6.4) complémentaire à celle-ci.

9. Système de fixation (1) selon la revendication 7, **caractérisé en ce que** la cheville (4.1) comporte une tête polygonale (4.3) et **en ce que** dans la douille (7) avant dans la direction d'ancrage (5), un adaptateur (10) pourvu d'un logement polygonal (10.1) complémentaire à la tête polygonale (4.3) est inséré de manière bloquée en rotation.

10. Système de fixation (1) selon la revendication 9, **caractérisé en ce que** toutes les douilles (7) sont de configuration identique.

11. Système de fixation (1) selon l'une quelconque des revendications 1 à 10, **caractérisé en ce que** chaque douille (6,7) comporte un corps de base avec une section transversale circulaire.

12. Système de fixation (1) selon l'une quelconque des revendications 1 à 11, **caractérisé en ce que** chaque douille (6,7) comporte au moins deux espaceurs (15) distribués sur sa circonférence, qui saillissent au-delà d'une surface d'enveloppe de la douille (6,7).

13. Système de fixation (1) selon l'une quelconque des revendications 1 à 12, **caractérisé en ce que** sur la douille arrière (7) dans la direction d'ancrage (5) est placée de manière amovible une rondelle d'arrêt (16) hélicoïdale dotée d'une arête coupante (16.2).

14. Système de fixation (1) selon l'une quelconque des revendications 1 à 13, **caractérisé en ce que** les ajours de paroi (8) dans les douilles (6,7) sont aménagés pour un passage d'un agent adhésif, notamment d'une mousse à coller.
